# EUROPEAN PATENT SPECIFICATION

(11) **EP 3 376 690 B1**
(45) Date of publication and mention of the grant of the patent: **27.04.2022**
(21) Application number: 16863680.1
(22) Date of filing: 11.11.2016
(51) Int. Cl.: H04B 17/00, H04M 9/08

(54) **AUDIO CONVERSION CHARACTERISTIC TEST METHOD**
PRÜFVERFAHREN FÜR AUDIOKONVERSIONSEIGENSCHAFTEN
PROCÉDÉ DE TEST DE CARACTÉRISTIQUE DE CONVERSION AUDIO

(30) Priority: 13.11.2015 CN 201510780270
(43) Date of publication of application: 19.09.2018
(73) Proprietor: THE THIRD RESEARCH INSTITUTE OF MINISTRY OF PUBLIC SECURITY, Shanghai 200031 (CN); Shanghai Jinghui Electronics Equipment Minhang Co., Ltd., Shanghai 201100 (CN)
(72) Inventor: RONG, Ling, Shanghai 200031 (CN); BAO, Yiming, Shanghai 200031 (CN); YANG, Zhuying, Shanghai 200031 (CN); HU, Rong, Shanghai 201100 (CN)
(74) Representative: Herzog IP Patentanwalts GmbH
(86) International application number: PCT/CN2016/105453
(87) International publication number: WO 2017/080504

(56) References cited:
- CN-A- 101 110 654
- CN-A- 102 332 261
- CN-A- 103 607 669
- CN-A- 104 050 964
- CN-A- 105 450 882
- JP-A- 2001 285 443

## Description

### BACKGROUND OF THE INVENTION

### 1. Field of the Invention

The invention relates to the technical field of audio test, and more particularly, to an audio conversion characteristic test method.

### 2. Description of the Related Art

Now, there are many digital end-to-end devices without standard interfaces or transfer protocols that are non-standard or adopt encryption technology. However, the existing electro-acoustic test methods cannot be used for effective testing, thus, only an end-to-end full range acoustic signal can be used. For example, in a building intercom system, we use the technical protection products for household safety, since the transfer protocol is non-standard and the interface is non-standard, testing of the voice quality can only be done with the full-range acoustic test. For example, in a family building intercom, when a sending module requests an information from a receiving module, the sending module needs to transmit the information to the receiving module through the an audio channel in a system network. After a certain delay, after receiving the request information from the sending module, the receiving module sends feedback information to the sending module. It is noted that an operation is needed to be done in prior to the sending module receiving the feedback information, and the operation is the conversion of the conversion device. In addition, there is a requirement for turning on the conversion device, especially for a non-duplex channel communication device, if the conversion device is turned on too early, it will cause the request sent by the sending module to be converted before it is completely received; if too late, it will cause the beginning of the feedback information sent by the receiving module not to be sent to the sending module. Therefore, there is a requirement for the audio conversion characteristic, and testing of the conversion characteristic becomes an essential step before the requirement is met. CN102332261A refers to audio end-to-end delay measuring method and device based on nonintrusive double-end collection, JP2001285443A refers to method and device for inspecting interphone.

Hence, how to complete the audio conversion characteristic in an effective way has become a big problem to those skilled in the art.

### SUMMARY OF THE INVENTION

Given that the foregoing problems exist in the prior art, the present invention provides an audio conversion device test method. After test signals generated by a first audio signal generator reach a receiving module after a first time delay, an audio analyzer of the receiving module measures a first time period required for a sound amplitude of feedback information sent by the receiving module to the audio channel to be less than a first pre-set value, calculate a conversion time according to the first time period and the first time delay, and determine whether a conversion performance is good according to the conversion time. The technical scheme is as follows:
an audio conversion characteristic test method, comprising the steps of:
providing an audio channel communication system comprising a sending module, a system network, a receiving module and a conversion device, wherein the sending module comprises a first audio signal generator, a first local interphone and an audio analyzer;
the first audio signal generator generating and sending a test signal unit to the first local interphone, and the first local interphone sending the received test signal unit to the receiving module via the system network; wherein the test signal unit is sent to the receiving module after a first time delay; the receiving module receiving the test signal unit, the conversion device executing a conversion operation, and the receiving module outputting feedback information to the audio analyzer according to the test signal unit;
the audio analyzer calculating a first time period for the feedback information to be transmitted in the audio channel communication system, wherein the first time period is a time period from a moment the receiving module sends the feedback information to a moment the amplitude of sound of feedback information in the audio channel communication system is lower than a first preset value, when the feedback information is transmitted in the audio channel communication system;
acquiring a second time delay from the moment the receiving module sends the feedback information to a moment the audio analyzer of the sending module receives the feedback information, and defining the first time period time deducted by the second time delay as a conversion time; and
comparing the conversion time with a preset first threshold value, if the conversion time is not greater than the first threshold value, the requirements being satisfied; otherwise, the conversion time not satisfying, and optimizing the conversion device.

The above audio conversion characteristic test method, wherein in prior to the step of the first audio signal generator generating the test signal unit and the first local interphone receiving the test signal unit, the method further comprising the step of: a first simulation mouth of the sending module equalizing the test signal unit.

The above audio conversion characteristic test method, wherein in prior to the audio analyzer receives the feedback information, the feedback information passes through a microphone.

The above audio conversion characteristic test method, wherein the microphone is a free-field microphone.

The above audio conversion characteristic test method, wherein in prior to the first audio signal generator generating a test signal, the first audio signal generator further generates a pre-test signal.

The above audio conversion characteristic test method, wherein the pre-test signal comprises three pre-test signals.

The above audio conversion characteristic test method, wherein the pre-test signal comprises nine pre-test signals.

The above audio conversion characteristic test method, wherein the first time delay is equal to the second time delay.

The above technical scheme has the following advantages or advantageous effects:
by implementing the technical scheme, the conversion performance of audio can be obtained effectively through the test, and the audio signal loss problem caused by advance or delayed conversion of the conversion device is avoided effectively. The method is simple and easy to implement, is of high efficiency and effectively improves the reliability of the whole system.

### BRIEF DESCRIPTION OF THE DRAWINGS

The accompanying drawings, together with the specification, illustrate exemplary embodiments of the present disclosure, and, together with the description, serve to explain the principles of the present invention.
Figure 1 is a flowchart of an audio conversion performance test method in an embodiment of the present invention;
Figure 2 is a schematic structural diagram of a set of test signal in an embodiment of the present invention;
Figure 3 is a schematic structural diagram of a set of test signal in another embodiment of the present invention;
Figure 4 is a schematic structural diagram of a test process in an embodiment of the present invention.

### DETAILED DESCRIPTION

The present invention will now be described more fully hereinafter with reference to the accompanying drawings, in which exemplary embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art, the scope of the invention being solely limited by the attached claims.

Like reference numerals refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including" or "has" and/or "having" when used herein, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

As used herein, "around", "about" or "approximately" shall generally mean within 20 percent, preferably within 10 percent, and more preferably within 5 percent of a given value or range. Numerical quantities given herein are approximate, meaning that the term "around", "about" or "approximately" can be inferred if not expressly stated.

As used herein, the term "plurality" means a number greater than one.

Hereinafter, certain exemplary embodiments according to the present disclosure will be described with reference to the accompanying drawings.

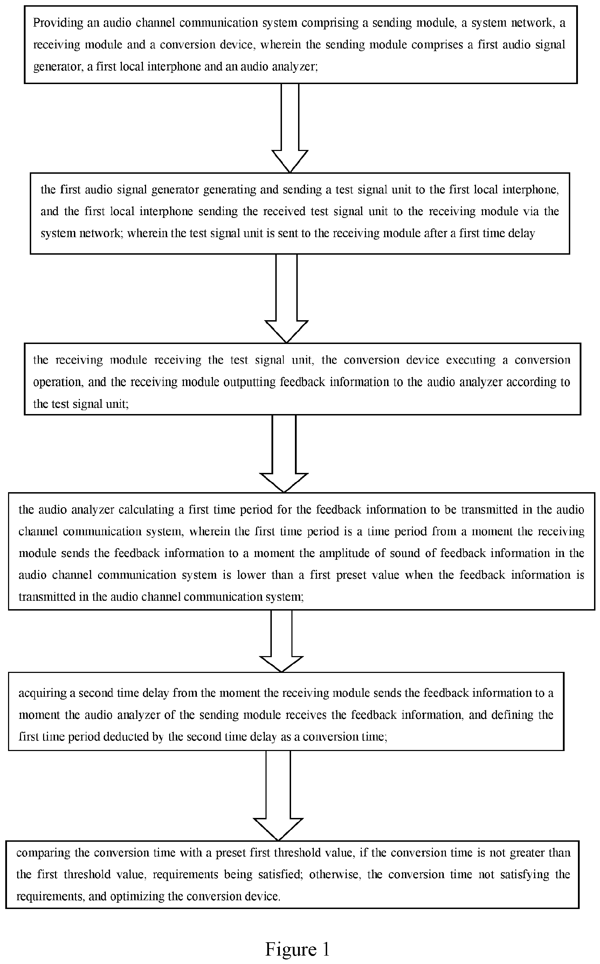

Referring to structure shown in Figure 1, the present invention provides an audio conversion characteristic test method, the method mainly comprising the steps of:
providing an audio channel communication system comprising a sending module, a system network, a receiving module and a conversion device;
a first audio signal generator of the sending module generates a test signal unit, and a first local interphone of the sending module sends the test signal unit to the receiving module via the system network;
after a first time delay, the receiving module receives the test signal unit, the receiving module sends feedback information to the sending module via the system network;
an audio analyzer of the sending module receives the feedback information, then the audio analyzer calculates a first time period from a moment the receiving module sends the feedback information to a moment the amplitude of sound, when the feedback information is transmitted in the audio channel communication system, is less than a first preset value (the first preset value is 3dB lower than the amplitude that sound can normally reach ears;
acquiring a second time delay from the moment the receiving module sends the feedback information to a moment the audio analyzer of the sending module receives the feedback information, and a conversion time is obtained by subtracting the second time delay from the first time period;
the conversion time is evaluated, if the conversion time is not greater than a first threshold, the requirements are satisfied; otherwise, the conversion time does not satisfy the requirements, then optimize the conversion device.

Preferably, in prior to the step of the first audio signal generator generating the test signal unit and the first local interphone receiving the test signal unit, the method further comprising the step of:
a first simulation mouth of the sending module equalizing the test signal unit.

Preferably, wherein the first time delay is equal to the second time delay.

Preferably, wherein in prior to the audio analyzer receiving the feedback information, the feedback information passes through a microphone.

On this basis, further, the microphone is a free-field microphone.

Preferably, wherein in prior to the first audio signal generator generating a test signal, the first audio signal generator further generates a pre-test signal.

On this basis, further, the pre-test signal group comprises three or nine pre-test signals.

Two embodiments are listed as follows:

### Embodiment 1:

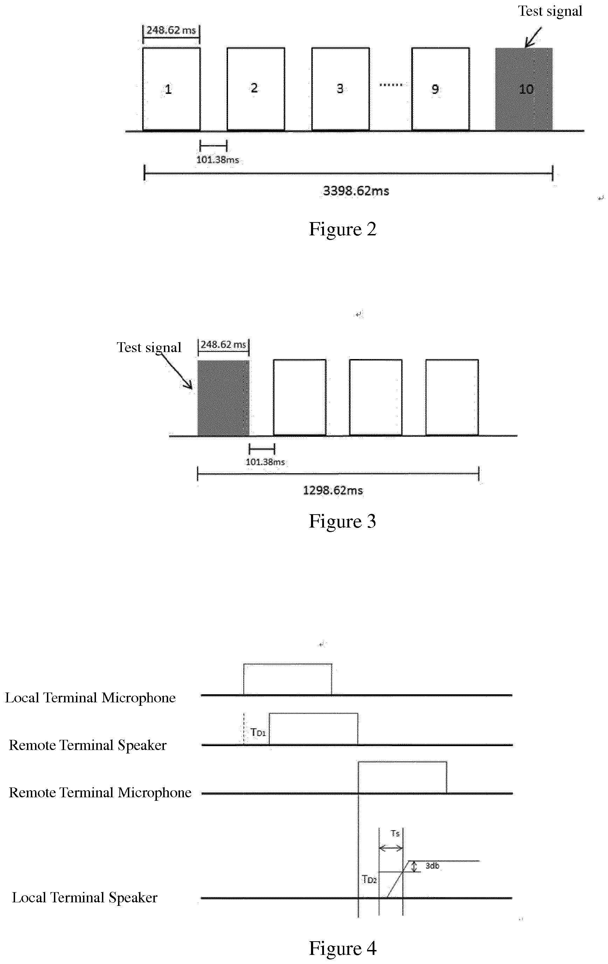

Referring to the structure shown in Figure 2, in prior to generating a test signal, the first audio signal generator of the sending module generates nine pre-test signals to test the performance of the audio channel. In this embodiment, the duration of one pre-test signal and the duration of the test signal are 248.62 ms, and the time interval between two adjacent pre-test signals and the time interval between the last pre-test signal and the test signal are 101.38 ms. Therefore, in this embodiment, the time of the test signal unit (including the time of the nine pre-test signals and the test signal) is 3398.62ms. Having sent the nine pre-test signals, the first audio signal generator sends the test signal, the test signal unit is then transmitted to the local interphone after being equalized by the first simulation mouth, and the equalized test signal unit is sent to the receiving module by the local interphone via the system network.

### Embodiment 2:

Referring to the structure shown in Figure 3, in prior to generating the test signal unit, the first audio signal generator of the sending module generates three pre-test signals to test the performance of the audio channel. In this embodiment, the duration of one pre-test signal and the duration of the test signal are 248.62 ms, and the time interval between two adjacent pre-test signals and the time interval between the last pre-test signal and the test signal are 101.38 ms. Therefore, in this embodiment, the time of the test signal unit (including the time of the three pre-test signals and the test signal) is 1298.62ms. Having sent the three pre-test signals, the first audio signal generator of the sending module sends the test signal unit, the test signal unit is then transmitted to the local interphone after being equalized by the first simulation mouth, and the equalized test signal unit is sent to the receiving module by the local interphone via the system network.

Referring to the structure shown in Figure 4, after the first time delay TD1, after receiving the test signal unit, the receiving module sends feedback information for the test signal unit, and before the moment the receiving module sends the feedback information and after the moment the receiving module receives the test signal unit, the conversion of the conversion device needs to be completed. Also, the conversion of the conversion device must be done after the receiving module completely receives the test signal unit sent by the sending module and before the receiving module sends he feedback information, so as to ensure that the test signal unit sent by the sending module is completely received by the receiving module, and that the feedback information sent by the receiving module can be transmitted to the sending module in a more complete way.

Hence, a time period between the reception of the test signal unit by the receiving module and the reception of the feedback signal by the sending module includes a second time delay TD2 and a conversion time Ts. Since the sending module sends the test signal unit to the receiving module through a system network, and the receiving module sends the feedback information to the sending module through the same system network, and both operations pass through their respective simulation mouth and microphone as required, therefore, it is preferable that the first time delay is equal to the second time delay, that is, TD1 is equal to TD2.

Therefore, the conversion time can be obtained by subtracting the first time delay from the first time period from the completion of the receiving module receiving the test signal unit to the sound amplitude in the audio channel being 3dB less than the normal one, that is, the conversion time is Ts.

Determine the conversion characteristic of the audio according to the conversion time. Hence, a threshold value is set depending on the requirement. When the conversion time is not greater than the first threshold value, the audio conversion characteristic is good, otherwise, the audio conversion characteristic does not satisfy the requirement, and the conversion device needs to be optimized.

It is noted that the first simulation mouth is not limited to the simulation mouth in the prior art, but may also be a simulation mouth of the HATS (head and shoulder simulator) that meets the requirements of the ITU-T P.58 <Head and torso simulator for telephone try> standard. The test method does not change, but the composition of the detection system is changed to HATS for voice output and voice collection at both ends. HATS is the simulation people commonly used in the testing of mobile phones, and the microphone and the simulation mouth are installed in the head of the simulation people.

At the same time, the sending module may be a call machine installed at a door of the building intercom system, or may be a receiver installed in a room, and may also be a management device installed in a security guard room, and the sending module is not limited to a certain device. When the sending module is the call machine at the door of the building intercom system, the receiving module is a receiver installed in the room or a management device installed in the security guard room; when the sending module is the receiver installed in the room, the receiving module is a call machine of the building intercom system or a management device installed in the security guard room; when the sending module is the management device installed in the security guard room, the receiving module is a receiver installed in the room or a call machine in a building intercom system, that is, in the end-to-end transmission, the sending module and the receiving module are defined with respect to audio signals, and are not intended to be limiting of a certain device.

It should be noted that such an audio conversion characteristic test method is not only applicable to digital building intercom system, but also applicable to conventional end-to-end delay testing having non-standard interfaces, non-standard transfer protocols and encrypted transmissions. The building intercom system is only a preferred embodiment and is not intended to limit the present invention.

In conclusion, after test signals generated by the first audio signal generator reach the receiving module after the first time delay, the audio analyzer of the receiving module measures a first time period required for a sound amplitude of feedback information sent by the receiving module to the audio channel to be 3dB lower than a normal one, and calculate a conversion time according to the first time period and the first time delay, and determine whether a conversion performance is good according to the conversion time. By implementing the technical scheme, the conversion performance of audio can be obtained effectively through test, and the audio signal loss problem caused by advance or delayed conversion of the conversion device is avoided effectively. The method is simple and easy to implement, is of high efficiency, and effectively improves the reliability of the whole system.

The above descriptions are only the preferred embodiments of the invention, not thus limiting the embodiments and scope of the invention. Those skilled in the art should be able to realize that the schemes obtained from the content of specification and drawings of the invention are within the scope of the invention, that is limited only by the following claims.

## Claims

1. An audio conversion characteristic test method, comprising the steps of:
providing an audio channel communication system comprising a sending module, a system network, a receiving module and a conversion device, wherein the sending module comprises a first audio signal generator, a first local interphone and an audio analyzer;
the first audio signal generator generating and sending a test signal unit to the first local interphone, and the first local interphone sending the received test signal unit to the receiving module via the system network; wherein the test signal unit is sent to the receiving module after a first time delay;
the receiving module receiving the test signal unit, the conversion device executing a conversion operation, and the receiving module outputting feedback information to the audio analyzer according to the test signal unit;
the audio analyzer calculating a first time period for the feedback information to be transmitted in the audio channel communication system, wherein the first time period is a time period from a moment the receiving module sends the feedback information to a moment the amplitude of sound of feedback information in the audio channel communication system is lower than a first preset value when the feedback information is transmitted in the audio channel communication system;
acquiring a second time delay from the moment the receiving module sends the feedback information to a moment the audio analyzer of the sending module receives the feedback information, and defining the first time period deducted by the second time delay as a conversion time; and
comparing the conversion time with a preset first threshold value, if the conversion time is not greater than the first threshold value, requirements being satisfied; otherwise, the conversion time not satisfying the requirements, and optimizing the conversion device.

2. The audio conversion characteristic test method of claim 1, wherein in prior to the step of the first audio signal generator generating the test signal unit and the first local interphone receiving the test signal unit, the method further comprising the step of: a first simulation mouth of the sending module equalizing the test signal unit.

3. The audio conversion characteristic test method of claim 1, wherein in prior to the audio analyzer receiving the feedback information, the feedback information passes through a microphone.

4. The audio conversion characteristic test method of claim 3, wherein the microphone is a free-field microphone.

5. The audio conversion characteristic test method of claim 1, wherein in prior to the first audio signal generator generating a test signal, the first audio signal generator further generates a pre-test signal.

6. The audio conversion characteristic test method of claim 5, wherein the pre-test signal comprises three pre-test signals.

7. The audio conversion characteristic test method of claim 5, wherein the pre-test signal comprises nine pre-test signals.

8. The audio conversion characteristic test method of claim 1, wherein the first time delay is equal to the second time delay.

## Patentansprüche

1. Verfahren zur Prüfung der Audioumwandlungscharakteristik, das die folgenden Schritte umfasst:
Bereitstellung eines Audiokanal-Kommunikationssystems, das ein Sendemodul, ein Systemnetzwerk, ein Empfangsmodul und eine Umwandlungsvorrichtung umfasst, wobei das Sendemodul einen ersten Audiosignalgenerator, ein erstes lokales Interphone und einen Audioanalysator umfasst;
der erste Audiosignalgenerator eine Testsignaleinheit erzeugt und an die erste lokale Gegensprechanlage sendet, und die erste lokale Gegensprechanlage die empfangene Testsignaleinheit über das Systemnetz an das Empfangsmodul sendet; wobei die Testsignaleinheit nach einer ersten Zeitverzögerung an das Empfangsmodul gesendet wird;
das Empfangsmodul die Testsignaleinheit empfängt, die Umwandlungsvorrichtung eine Umwandlungsoperation ausführt und das Empfangsmodul Rückkopplungsinformationen an den Audioanalysator gemäß der Testsignaleinheit ausgibt;
der Audioanalysator eine erste Zeitspanne für die in dem Audiokanal-Kommunikationssystem zu übertragenden Rückkopplungsinformationen berechnet, wobei die erste Zeitspanne eine Zeitspanne von einem Moment, in dem das Empfangsmodul die Rückkopplungsinformationen sendet, bis zu einem Moment ist, in dem die Tonamplitude der Rückkopplungsinformationen in dem Audiokanal-Kommunikationssystem niedriger als ein erster voreingestellter Wert ist, wenn die Rückkopplungsinformationen in dem Audiokanal-Kommunikationssystem übertragen werden;
Erfassen einer zweiten Zeitverzögerung von dem Zeitpunkt, zu dem das Empfangsmodul die Rückkopplungsinformation sendet, bis zu einem Zeitpunkt, zu dem der Audioanalysator des Sendemoduls die Rückkopplungsinformation empfängt, und Definieren der ersten Zeitperiode, die von der zweiten Zeitverzögerung abgezogen wird, als eine Umwandlungszeit; und
Vergleichen der Umwandlungszeit mit einem voreingestellten ersten Schwellenwert, wenn die Umwandlungszeit nicht größer als der erste Schwellenwert ist, sind die Anforderungen erfüllt; andernfalls erfüllt die Umwandlungszeit die Anforderungen nicht, und Optimieren der Umwandlungsvorrichtung.

2. Verfahren zum Testen der Audioumwandlungscharakteristik nach Anspruch 1, wobei vor dem Schritt, bei dem der erste Audiosignalgenerator die Testsignaleinheit erzeugt und die erste lokale Gegensprechanlage die Testsignaleinheit empfängt, das Verfahren ferner den folgenden Schritt umfasst: ein erster Simulationsmund des Sendemoduls entzerrt die Testsignaleinheit.

3. Verfahren zur Prüfung der Audioumwandlungscharakteristik nach Anspruch 1, wobei die Rückkopplungsinformation ein Mikrofon durchläuft, bevor der Audioanalysator die Rückkopplungsinformation empfängt.

4. Verfahren zur Prüfung der Audioumwandlungscharakteristik nach Anspruch 3, wobei das Mikrofon ein Freifeldmikrofon ist.

5. Testverfahren für die Audioumwandlungscharakteristik nach Anspruch 1, wobei der erste Audiosignalgenerator vor der Erzeugung eines Testsignals ein Vortestsignal erzeugt.

6. Verfahren zur Prüfung der Audioumwandlungscharakteristik nach Anspruch 5, wobei das Vortestsignal drei Vortestsignale umfasst.

7. Verfahren zur Prüfung der Audioumwandlungscharakteristik nach Anspruch 5, wobei das Vortestsignal neun Vortestsignale umfasst.

8. Verfahren zur Prüfung der Audioumwandlungscharakteristik nach Anspruch 1, wobei die erste Zeitverzögerung gleich der zweiten Zeitverzögerung ist.

## Revendications

1. Procédé de test de la caractéristique de conversion audio, comprenant les étapes consistant à :
fournir un système de communication par canal audio comprenant un module d'émission, un réseau de système, un module de réception et un dispositif de conversion, dans lequel le module d'émission comprend un premier générateur de signal audio, un premier interphone local et un analyseur audio ;
le premier générateur de signaux audio générant et envoyant une unité de signal de test au premier interphone local, et le premier interphone local envoyant l'unité de signal de test reçue au module de réception via le réseau du système ; dans lequel l'unité de signal de test est envoyée au module de réception après un premier délai ;
le module de réception reçoit l'unité de signal de test, le dispositif de conversion exécute une opération de conversion, et le module de réception émet des informations de retour vers l'analyseur audio en fonction de l'unité de signal de test ;
l'analyseur audio calculant une première période de temps pour que les informations de retour soient transmises dans le système de communication par canal audio, dans lequel la première période de temps est une période de temps à partir d'un moment où le module de réception envoie les informations de retour jusqu'à un moment où l'amplitude du son des informations de retour dans le système de communication par canal audio est inférieure à une première valeur prédéfinie lorsque les informations de retour sont transmises dans le système de communication par canal audio ;
l'acquisition d'un second délai entre le moment où le module de réception envoie les informations de retour et le moment où l'analyseur audio du module d'envoi reçoit les informations de retour, et la définition de la première période de temps déduite du second délai comme un temps de conversion ; et
comparer le temps de conversion avec une première valeur de seuil prédéfinie, si le temps de conversion n'est pas supérieur à la première valeur de seuil, les exigences sont satisfaites ; sinon, le temps de conversion ne satisfait pas les exigences, et optimiser le dispositif de conversion.

2. Procédé de test de caractéristique de conversion audio selon la revendication 1, dans lequel, avant l'étape de génération de l'unité de signal de test par le premier générateur de signal audio et de réception de l'unité de signal de test par le premier interphone local, le procédé comprend en outre l'étape suivante : une première bouche de simulation du module d'envoi égalisant l'unité de signal de test.

3. Procédé de test de caractéristique de conversion audio de la revendication 1, dans lequel, avant que l'analyseur audio ne reçoive les informations de retour, les informations de retour passent par un microphone.

4. Procédé de test de caractéristique de conversion audio de la revendication 3, dans lequel le microphone est un microphone à champ libre.

5. Procédé de test de caractéristique de conversion audio de la revendication 1, dans lequel, avant que le premier générateur de signal audio ne génère un signal de test, le premier générateur de signal audio génère en outre un signal de pré-test.

6. Le procédé de test de caractéristique de conversion audio de la revendication 5, dans lequel le signal de pré-test comprend trois signaux de pré-test.

7. Le procédé de test de caractéristique de conversion audio de la revendication 5, dans lequel le signal de pré-test comprend neuf signaux de pré-test.

8. Procédé d'essai de caractéristique de conversion audio de la revendication 1, dans lequel le premier retard est égal au second retard.
